# EUROPÄISCHE PATENTSCHRIFT

(11) **EP 2 056 957 B1**
(45) Veröffentlichungstag und Bekanntmachung des Hinweises auf die Patenterteilung: **16.03.2011**
(21) Anmeldenummer: 07802064.1
(22) Anmeldetag: 01.09.2007
(51) Int. Cl.: B01J 2/16, B02C 19/06

(54) **VERFAHREN UND VORRICHTUNG ZUR HERSTELLUNG UND/ODER KONDITIONIERUNG VON PULVERFÖRMIGEM MATERIAL**
METHOD AND DEVICE FOR THE PRODUCTION AND/OR CONDITIONING OF POWDERED MATERIAL
PROCÉDÉ ET DISPOSITIF DE PRODUCTION ET/OU DE CONDITIONNEMENT D'UN MATÉRIAU EN POUDRE.

(30) Priorität: 22.11.2006 DE 102006054930
(43) Veröffentlichungstag der Anmeldung: 13.05.2009
(73) Patentinhaber: Glatt Ingenieurtechnik GmbH, 99427 Weimar (DE)
(72) Erfinder: RÜMPLER, Karlheinz, 99425 Weimar (DE); JACOB, Michael, 99427 Weimar (DE); OHLENDORF, Frank, 99198 Kerspleben (DE); WAND, Bernhard, 99510 Apolda (DE); BÖBER, Reinhard, 99425 Weimar (DE)
(74) Vertreter: Maucher, Wolfgang
(86) Internationale Anmeldenummer: PCT/EP2007/007647
(87) Internationale Veröffentlichungsnummer: WO 2008/061579

(56) Entgegenhaltungen:
- DD-A5- 296 215
- DE-A1- 10 303 836
- US-A- 5 980 815

## Beschreibung

Die Erfindung betrifft ein Verfahren zur Herstellung und/oder Konditionierung von pulverförmigem Material mit den im Oberbegriff des Patentanspruches 1 genannten Merkmalen und eine dazugehörige Vorrichtung mit den im Oberbegriff des Patentanspruches 9 genannten Merkmalen.

Es ist bekannt, pulverförmiges Material in einer fluidisierten Materialschicht herzustellen, bei dem ein Gasstrom zur Aufrechterhaltung der fluidisierten Materialschicht zugeführt wird. Dabei sind folgende grundsätzliche Arten zum Betreiben einer fluidisierten Materialschicht bekannt, mit der granuliertes oder pulverförmiges Material hergestellt werden kann.

### 1. Sprühtrockner

In einem Sprühtrockner, wie er beispielsweise aus der Patentschrift DD 285 724 A5 bekannt ist, wird in den materialbeladenen heißen Gasstrom eine feststoffhaltige Flüssigkeit eingesprüht. Durch Trocknung im Gasstrom entstehen Materialteilchen, die eine Hohlkugelform aufweisen oder deren Bruchstücke. Die entstehenden Materialteilchen weisen eine relativ große Korngröße auf und besitzen meist schlechte Redispergiereigenschaften. Ein Sprühtrockner nach dem Stand der Technik ist ein sehr großer und damit teurer Apparat, mit einem großen Bedarf an umbautem Raum und einem großen Energiebedarf. Diese Sprühtrockner sind nicht geeignet, um sehr kleine Feststoffpartikel herzustellen. Eine zusätzliche thermische Behandlung der hergestellten Partikel im Sprühtrockner ist nicht möglich.

### 2. Wirbelschicht-Apparate mit Inertbetten

Wirbelschicht-Apparate mit Inertbetten, wie sie beispielsweise aus der Patentschrift US 6187238 bekannt sind, besitzen einen gasdurchlässigen Wirbelschichtboden. Durch das von unten zugeführte Gas wird über dem Wirbelschichtboden eine fluidisierte Materialschicht gebildet, in der auch entsprechende Inertkörper vorhanden sind. Allerdings sind auch mit ihnen keine sehr feinen Partikel unter ungefähr 100 µm herstellbar, da der auf die Inertpartikel wirkende Impuls nur durch die vorwiegend senkrechte Auf- und Abwärtsbewegung der Inertpartikel im Existenzbereich der Wirbelschicht, also nur zwischen Wirbelpunkt und Austragspunkt, bestimmt ist und damit den Anforderungen zur Herstellung feiner Feststoffteilchen aus verdampfbaren/verdunstbaren Flüssigkeiten nicht genügt. Neben der Trocknung des in der hinein gebrachten Flüssigkeit enthaltenen Feststoffes auf den Inertkörperflächen ist in einer Wirbelschichtstufe keine weitere thermische Behandlung möglich.

### 3. Sprühtürme mit Wirbelschichten

Es sind auch beispielsweise aus der Patentschrift DD 272 576 A3 Sprühtürme bekannt, die an ihrem unteren Ende mit einer Wirbelschicht betrieben werden. Die Wirbelschichten können dabei mit und ohne Inertkörper betrieben werden. Hier wären bedingt thermische oder mechanische Nachbehandlungen, durch einen entsprechenden Abrieb, der aus dem Sprühturm heruntergefallenen Partikel möglich. Nachteilig dabei ist, dass bei der thermischen Nachbehandlung eine Vermischung verschiedener Gasströme stattfindet. Auch bei dieser Kombination ist die Herstellung feiner Teilchen aus den o. g. Ursachen begrenzt.

### 4. Strahlschichtapparate

In einer Inertbett-Strahlschicht-Stufe ist der auf die Inertpartikel ausübbare Impuls wesentlich größer als in einer Wirbelschicht mit den gleichen Inertkörpern, da im Strahlbereich die Partikelgeschwindigkeit wesentlich größer (z.B. 10 mal größer) als die Austragsgeschwindigkeit der Partikel ist und die Partikel wegen der strahlapparatetypischen Gestaltung trotzdem nicht ausgetragen werden. Aus der (Patentschriften DD 225 630 A1, DD 224 233 A1, DE 103 03 836 B4 , US 5980 815) sind Strahlschichtapparate zur Herstellung von pulverförmigem Material bekannt. Dabei wird zur Erzeugung einer vertikal rotierenden Strahlschicht dem Strahlschichtapparat von unten ein Gasstrom mit hoher Geschwindigkeit zugeführt. Eine feststoffhaltige Flüssigkeit wird zum Beispiel durch Ein-, Zwei- oder Mehrstoffdüsen von unten, von oben oder seitlich in die Strahlkammer so eingedüst, dass die Flüssigkeit möglichst stets die Inertpartikeloberflächen benetzt, d.h. dass es keinen Overflow gibt. Die feststoffhaltige Flüssigkeit, zum Beispiel Schlamm, kann auch durch geeignete Fördereinrichtungen, wie zum Beispiel Schnecken und/oder Schlammverteiler, z.B. rotierende Räder, auf das bewegte Inertbett aufgegeben werden. Als Inertpartikel werden Strahlkugeln, Keramikkugeln oder Teflonpartikel geeigneter Korngröße, Form, Oberflächenbeschaffenheit und Dichte verwendet, die sich in der Strahlschicht befinden. Durch den heißen Gasstrom werden die Flüssigkeiten verdampft, so dass einerseits trockene Materialpartikel und an den Inertpartikeln angetrocknetes Material entsteht. Die Materialpartikel und der angetrocknete Feststoff werden durch die sich in Strahlwalzenform bewegenden Inertpartikel abgerieben und in Form von Staub (z.B. < 50 µm) aus der Strahlkammer ausgetragen. Der Staub wird normalerweise als Produkt in außen liegenden, einzelnen oder mehrfach hintereinander geschalteten unterschiedlichen Feststoffabscheidern gleichen oder unterschiedlichen Typs (Zyklone, Filter) abgeschieden. Durch die Mehrfach-Hintereinanderschaltung von Staubabscheidern nach dem Strahlschichtapparat können staubförmige Produkte immer kleinerer Partikelabmessungen - entsprechend der Leistungsfähigkeit der einen Inertbett-Strahlschichtstufe - gewonnen werden. Nachteilig ist, dass die gewünschten kleinen Korngrößen nur in verschwindend geringen Mengen anfallen. Außerdem ist die Hintereinanderschaltung von Staubabscheidern energieaufwendig und damit teuer.

Aufgabe der Erfindung ist es, ein Verfahren und eine dazugehörige Vorrichtung zur Herstellung und/oder Konditionierung von pulverförmigem Material in einer Strahlschicht mit Inertpartikeln zu schaffen, bei dem in einem kontinuierlichen Apparatedurchgang ein trockenes feines Pulver mit sehr kleinem Partikeldurchmesser kostengünstig und in entsprechend großen Mengen erzeugt und/oder konditioniert wird.

Diese Aufgabe wird erfindungsgemäß für das Verfahren durch die kennzeichnenden Merkmale des Patentanspruches 1 und für die Vorrichtung durch die kennzeichnenden Merkmale des Patentanspruches 9 gelöst.

Das erfindungsgemäße Verfahren ist gekennzeichnet durch eine mindestens zweistufige Behandlung des Materials in einer Strahlschicht mit Inertpartikeln. Dabei wird das aus einer ersten Strahlschicht vorbehandelte und in einer integrierten Staubabscheidevorrichtung von den gröberen Materialpartikeln getrennte pulverförmige Material mit der aus der ersten Strahlschicht austretenden Gasströmung als Material-Gasströmung einer darüberliegenden zweiten Strahlschicht zur weiteren Zerkleinerung und Konditionierung zugeführt. Nach Trennung der Feinpartikel von den gröberen Materialpartikeln in einer in der zweiten Stufe integrierten Staubabscheidevorrichtung werden die Feinpartikel als pulverförmiges Material mit sehr kleinen Partikeldurchmessern mit der Gasströmung aus der zwei- oder mehrstufigen Strahlschichtbehandlung ausgetragen. Die abgeschiedenen gröberen Materialpartikel werden wieder der Strahlschicht der zweiten Strahlkammer zugeführt.

Die erfindungsgemäße Vorrichtung besteht aus einem Strahlschichtapparat, in dem eine erste Strahlkammer mit einer integrierten Staubabscheidevorrichtung und eine zweite darüber liegende Strahlkammer mit einer weiteren integrierten Staubabscheidevorrichtung angeordnet ist.

Durch Anordnung von Heiz- und/oder Kühleinrichtungen und/oder Zuführungen von Flüssigkeiten oder feststoffhaltigen Flüssigkeiten kann das herzustellende Material zusätzlich definiert thermisch behandelt und konditioniert, wie polymerisiert, verfestigt oder gecoatet, werden.

Der Vorteil des erfindungsgemäßen Verfahrens und der Vorrichtung besteht darin, dass in einem kontinuierlichen Apparatedurchgang auf effektive Weise ein einheitliches feines, staubförmiges Produkt mit sehr kleinem Partikeldurchmesser hergestellt wird. Außerdem kann das herzustellende Material bei Bedarf in der Strahlschicht schonend thermisch behandelt (konditioniert) werden, um somit ein Pulver mit Eigenschaften bekannter aber auch neuartiger Produktmorphologien zu erzielen.

Ein weiterer Vorteil besteht darin, dass die Herstellung des pulverförmigen Materials mit sehr kleinen Partikeldurchmessern nur in einem Apparat durchgeführt wird, so dass keine zusätzlichen externen Wärmeüberträger, Mühlen oder Siebe mehr erforderlich sind. Es ist lediglich ein handelsübliches leistungsfähiges Gebläse im Druck- oder Saugbetrieb - oder deren Kombination - erforderlich, um den Anfangsdruckverlust der Strahlschicht zu überwinden, um dann im Betriebszustand mit dem bekanntermaßen wesentlich geringeren Schichtdruckverlust weiter arbeiten zu können.

Weitere vorteilhafte Ausgestaltungen sind in den Unteransprüchen beschrieben, sie werden in der Beschreibung zusammen mit ihrer Wirkung erläutert.

Die Erfindung wird nachfolgend anhand eines Ausführungsbeispiels näher erläutert. In den dazugehörigen Zeichnungen zeigen:
- Fig. 1: einen erfindungsgemäßen Strahlschichtapparat im Schnitt,

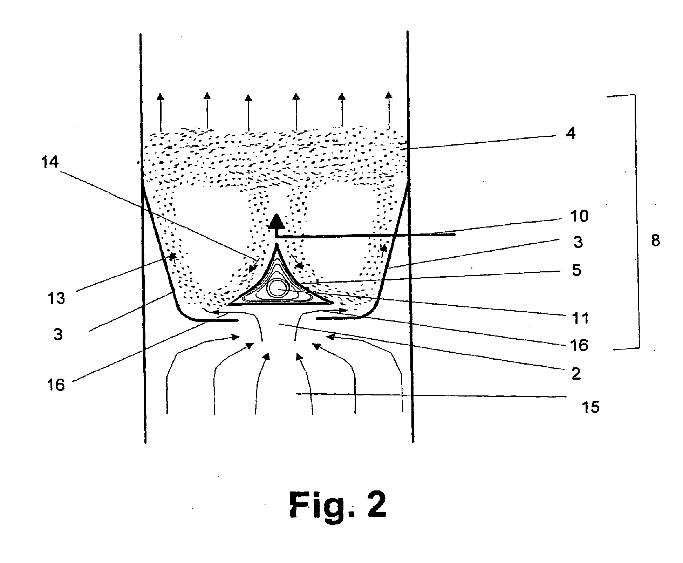

- Fig. 2: eine Einzelheit des Strahlschichtapparats im Schnitt und
- Fig. 3: Ausführungsformen eines Einbauteils in dem Strahl- schichtapparat im Schnitt.

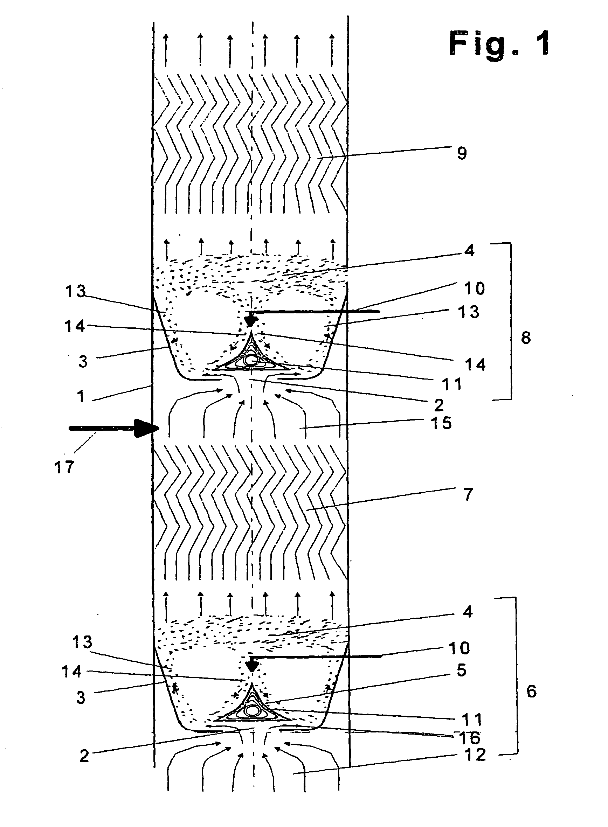

In der Figur 1 ist ein erfindungsgemäßer Strahlschichtapparat 1 dargestellt, der vorzugsweise einen zweiseitig symmetrischen rechteckigen Querschnitt aufweist. Es ist aber auch denkbar, den Strahlschichtapparat 1 mit einem runden Querschnitt auszuführen. Der Strahlschichtapparat 1 besteht aus einer ersten Strahlkammer 6 mit einer integrierten Staubabscheidevorrichtung 7 und einer zweiten darüber liegenden Strahlkammer 8 mit einer integrierten Staubabscheidevorrichtung 9. In der Strahlkammer 6 und/oder der Strahlkammer 8 sind Eindüsungen 10 für Flüssigkeiten oder feststoffhaltige Flüssigkeiten, wie Suspensionen, Lösungen, Schmelzen oder Schlämme, angeordnet. Dem Strahlschichtapparat 1 ist ein nicht dargestellter Abscheider zur Endabscheidung des einheitlichen Zielgrößenprodukts nachgeschaltet.

Die über der Strahlkammer 6 bzw. 8 angeordnete Staubabscheidevorrichtung 7 bzw. 9 ist beispielsweise ein Zick-Zack-Sichter. Die Staubabscheidevorrichtungen 7 und 9 können auch durch eine Querschnittserweiterung der Außenwände des Strahlschichtapparates 1 gebildet werden. Die Staubabscheidevorrichtung 9 weist einen höheren Abscheidegrad auf als die Staubabscheidevorrichtung 7, so dass nur Material mit der gewünschten Partikelgröße über die Staubabscheidevorrichtung 9 aus dem Strahlschichtapparat 1 ausgetragen wird.

Die Strahlkammern 6 und 8 weisen im unteren Bereich eine nahezu mittig angeordnete Öffnung 2 auf. Die Öffnung 2 mündet in einen beidseitig in einen in Richtung der Seitenwände 3 weisenden Kanal 16. Die Seitenwände 3 sind dabei zur Vertikalen nach außen geneigt und gerade oder mit innerer Krümmung versehen. Über der Öffnung 2 der Strahlkammern 6 und 8 ist ein keilförmig ausgebildetes Einbauteil 5 angeordnet. Dabei bildet die untere Wand des Einbauteils 5 jeweils eine Seitenwand des Kanals 16. Das in den Strahlkammern 6 und 8 befindliche Einbauteil 5 ist hohl ausgebildet, wobei in dem hohl ausgebildeten Einbauteil 5 eine regelbare Heizeinrichtung 11, beispielsweise Hochfrequenz-Heizelemente, zur thermischen Behandlung des Materials angeordnet ist. Die Seitenwände des keilförmigen Einbauteils 5 weisen eine gerade oder nach innen gekrümmte Kontur auf, wobei der Winkel A zwischen den Seitenwänden und der Grundfläche des Einbauteils 5 zwischen ca. 45° bis 60° liegt.

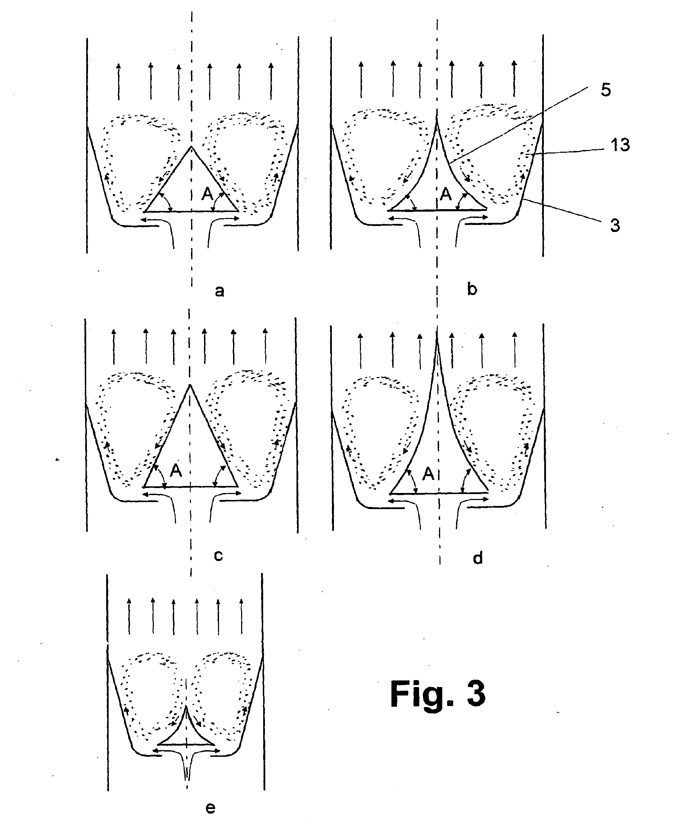

In der Figur 3 sind entsprechende Ausführungsformen des Einbauteils 5 dargestellt.

In der Figur 4a und 4c sind die Außenwände des Einbauteils 5 gerade ausgebildet, wobei die Außenwände in Figur 4c höher gezogen sind als in Figur 4a. Die Figur 4b zeigt Außenwände mit einer nach innen gekrümmten Kontur. In Figur 4d sind die gekrümmten Außenwände höher gezogen. In Figur 4e sind die gekrümmten Außenwände nicht so hoch gezogen und die geneigten Außenwände sind nachgeführt.

Entsprechend dem erfindungsgemäßen Verfahren wird der Strahlkammer 6 eine Gas- oder eine Materialgasströmung 12 und der Strahlkammer 8 eine Material-Gasströmung 15 nahezu mittig zugeführt und in Richtung der äußeren Seitenwände 3 des Strahlschichtapparates 1 derart umgelenkt, dass sich eine in axialer Richtung der Strahlkammern 6 und 8 liegende walzenförmige, mit an den äußeren Seitenwänden 3 nach oben gerichtete Strömung 13 ergibt. Es wurde gefunden, dass bei dieser Strahlführung die Abriebwirkung des sich walzenförmig entlang der äußeren geneigten Seitenwände 3 nach oben bewegenden Inertbettes wesentlich größer ist als bei der Strahlführung von außen nach innen. In den Strahlkammern. 6 und 8 wird durch die Gasströmung eine Strahlschicht 4 gebildet, die aus Materialpartikeln, Inertkörpern und aus den an den Inertkörpern haftenden feuchten und trockenen MaterialpartikeIn besteht. Durch die nach oben gerichtete Strömung 13 werden die Materialpartikel und die Inertkörper schnell entlang der geneigten äußeren Seitenwand 3 hoch geschleudert und entlang der inneren geneigten Seitenwände des Einbauteils 5 entsprechend der Pfeilrichtung 14 wieder zur Gaszuführung zurückgeführt, und wieder hochgeschleudert, so dass sich eine Walzenform der Inertpartikelströmung ausbildet. Über der Walze kann sich ggf. eine schnell hin und her bewegte Partikelschicht ausprägen. Diese Partikelzirkulation erfolgt sehr schnell und stabil.

Der Strahlschicht 4 in der Strahlkammer 6 und/oder der Strahlkammer 8 können über eine Eindüsung 10 Flüssigkeiten oder feststoffhaltige Flüssigkeiten, wie Suspensionen, Lösungen, Schmelzen oder Schlämme, zugeführt werden.

Oberhalb der Strahlkammer 6 erfolgt durch die Staubabscheidevorrichtung 7 eine Materialabscheidung, um den Heraustransport wesentlich zu großer Staubpartikel aus der ersten Strahlschicht 4 der Strahlkammer 6 zu verhindern und um diese wieder nach unten in die erste Strahlschicht 4 zurückzuführen. Der Staubabscheider 7 ist so bemessen, dass er sowohl die Staubpartikel der gewünschten Abmessungen und auch Staubpartikel mit noch etwas größeren Abmessungen passieren lässt, aber keine wesentlich zu großen Partikel mehr. Die wesentlich zu großen Staubpartikel fallen wieder in die erste Strahlschicht 4 der Strahlkammer 6 zurück und werden dort weiter zerkleinert und wieder nach oben ausgetragen.

Die den Staubabscheider 7 passiert habenden Materialpartikel werden mit dem Gasstrom als Material-Gasströmung 15 der darüberliegenden Strahlkammer 8 zugeführt. In der Strahlkammer 8 wird wiederum eine Strahlschicht 4 aufgebaut, die aber den veränderten Bedingungen angepasst ist. Die Strahlschicht 4 ist mit Inertkörpern versehen, die z. B. kleinere und/oder leichtere Inertpartikel mit rauhen Oberflächen bei ähnlicher Schichtmasse aufweisen. In der walzenförmigen Strahlschicht 4 der Strahlkammer 8 werden die noch zu großen Partikel weiter zerrieben und gehen danach zusammen mit den bereits Zielgröße habenden Staubpartikeln durch eine über der Strahlkammer 8 angeordnete Staubabscheidevorrichtung 9 hindurch, die nur noch für den Durchgang der Zielgrößenpartikel ausgelegt ist. Immer noch zu große Staubpartikel fallen aus der Staubabscheidevorrichtung 9 in die Strahlkammer 8 zurück und werden weiter kleiner gerieben.

Die apparateinterne exakte Temperatureinstellung, gegebenenfalls auch zur thermischen Behandlung des Materials, in der Strahlkammer 6 und 8 erfolgt erfindungsgemäß stufenlos hauptsächlich durch konventionelle Hochfrequenz-Heizer 11, mit einem Frequenzbereich von 30 kHz - 300 MHz. Die Heizeinrichtungen 11 sind in den Einbauteilen 5 angeordnet. An dessen äußeren Seitenwänden bewegen sich das Material und die Inertkörper in dichter Masse abwärts rutschend und mit geringer Geschwindigkeit, so dass hier besonders günstige Bedingungen für einen guten Wärmeübergang einerseits durch Wärmeleitung von der induktiv erwärmten Blechoberfläche der Einbauteile 5 an die dielektrisch erwärmten feucht beschichteten Inertpartikel, vor allem jedoch induktiv vom Hochfrequenzheizer 11 direkt an die feucht beschichteten Inertpartikel, vorliegen.

Besonders günstige Voraussetzungen für den Einsatz der Hochfrequenzheizung 11 sind dann gegeben, wenn das Feuchtprodukt - feuchter Staub, eingedüste Flüssigkeit oder zugegebener Schlamm - auf der Inertkörperoberfläche eine hinreichende ohmsche Leitfähigkeit besitzt, damit die Erwärmung durch lonenleitung im elektrischen Feld bewirkt werden kann. Die elektrische Leitfähigkeit ist hinreichend hoch, wenn beispielsweise in wasserfeuchtem Feststoff gelöste Salze enthalten sind. Da die elektrische Leitfähigkeit in solchen Feststoffen selbst vom Feuchtegehalt abhängt, werden die feuchteren Bereiche intensiver erwärmt als die schon trockenen Bereiche, was der Lösung der anstehenden Problematik sehr entgegenkommt. Diese Hochfrequenzheizer 11 wirken also schonend temperaturerhöhend oder stabilisierend sowohl auf die ggf. feucht beschichteten Seitenwände der Einbauteile 5 als auch vor allem auf die intensiv bewegte und durchmischte Strahlschicht, wenn die Inertkörper aus einem für die Hochfrequenzübertragung geeigneten Material bestehen und mit mehr oder weniger feuchten, abzureibenden Feststoffpartikeln beschichtet sind. So wird eine schnelle, effektive und exakte Wärmeübertragung an die beschichteten oder nicht beschichteten Inertkörper und damit an das zu behandelnde Produkt gewährleistet.

Zur Temperatureinstellung im niedrigen Temperaturbereich kann an Stelle der Hochfrequenzheizer ab der 2. Strahlschichtstufe 8 durch das hohl ausgebildete Einbauteil 5 direkt ein Kühlgas oder eine Kühlflüssigkeit geleitet werden.

Des weiteren kann zum gleichen Ziel zur 2. Strahlschichtstufe 8 ein Kühlgas durch eine Gaszuführung 17 zugegeben werden.

### Aufstellung der verwendeten Bezugszeichen

- 1: Strahlschichtapparat
- 2: Öffnung
- 3: Seitenwand
- 4: Strahlschicht
- 5: Einbauteil
- 6: Strahlkammer
- 7: Staubabscheidevorrichtung
- 8: Strahlkammer
- 9: Staubabscheidevorrichtung
- 10: Eindüsung
- 11: Heizeinrichtung
- 12: Gasströmung
- 13: nach oben gerichtete Strömung
- 14: Pfeilrichtung
- 15: Material-Gasströmung
- 16: Kanal
- 17: Kühlgaszuführung

- A: Winkel

## Patentansprüche

1. Verfahren zur Herstellung und/oder Konditionierung von pulverförmigem Material in einer Strahlschicht mit Inertbettpartikeln, bei dem die zu erzielende Partikelgröße durch Abrieb der sich in der Strahlschicht aneinander bewegenden Materialpartikel und der Inertbettpartikel erzeugt und das Endprodukt in einem Abscheider abgeschieden wird, **dadurch gekennzeichnet, dass** bei einer zwei- oder mehrstufigen Behandlung des Materials das in einer ersten Strahlschicht (4) vorbehandelte und in einer integrierten Staubabscheidevorrichtung (7) von den gröberen Materialpartikeln getrennte pulverförmige Material mit der aus der ersten Strahlschicht (4) austretenden Gasströmung als Material-Gasströmung (15) einer darüberliegenden zweiten Strahlschicht (4) zur weiteren Zerkleinerung und Konditionierung zugeführt wird und nach Trennung in einer integrierten Staubabscheidevorrichtung (9) von den gröberen Materialpartikeln mit der Gasströmung als pulverförmiges Material mit sehr kleinen Partikeldurchmessern aus der zweistufigen Strahlschichtbehandlung ausgetragen wird, während die gröberen Materialpartikel wieder der Strahlschicht (4) der zweiten Strahlkammer (8) zugeführt werden.

2. Verfahren nach Anspruch 1, **dadurch gekennzeichnet, dass** der Strahlkammer (6) eine Gas- oder eine Material-Gasströmung (12) und der Strahlkammer (8) eine Material-Gasströmung (15) nahezu mittig zugeführt und in Richtung der äußeren Seitenwände (3) des Strahlschichtapparates (1) derart umgelenkt wird, dass sich eine in axialer Richtung der Strahlkammern (6) und (8) liegende walzenförmige, mit an den äußeren Seitenwänden (3) nach oben gerichtete Strömung (13) ergibt.

3. Verfahren nach Anspruch 1 und 2, **dadurch gekennzeichnet, dass** die in der Staubabscheidevorrichtung (7) abgeschiedenen gröberen Materialpartikeln wieder der Strahlschicht (4) der ersten Strahlkammer (6) zugeführt werden.

4. Verfahren nach Anspruch 1 bis 3, **dadurch gekennzeichnet, dass** der Strahlkammer (6) und/oder der Strahlkammer (8) über eine Eindüsung (10) Flüssigkeiten oder feststoffhaltige Flüssigkeiten, wie Suspensionen, Lösungen, Schmelzen oder Schlämme, zugeführt werden.

5. Verfahren nach Anspruch 1 bis 4,**dadurch gekennzeichnet, dass** die Strahlschicht (4) der Strahlkammer (6) und (8) indirekt und regelbar, beispielsweise mittels Hochfrequenz-Strömen, zur thermischen Behandlung des Materials beheizt wird.

6. Verfahren nach Anspruch 1 bis 5, **dadurch gekennzeichnet, dass** die den Strahlkammern (6) und/oder (8) zugeführten Flüssigkeiten in Flüssigkeiten gelöste Salze enthalten.

7. Verfahren nach Anspruch 1 bis 6,**dadurch gekennzeichnet, dass** die in der Strahlschicht (4) der Strahlkammer (6) und (8) befindlichen Inertbettpartikel und/oder deren Beschichtung aus einem mit Hochfrequenz-Strömen beheizbaren Material bestehen.

8. Verfahren nach Anspruch 1 bis 7,**dadurch gekennzeichnet, dass** das aus der zweistufigen strahlschichtbehandlung ausgetragene pulverförmige trockene Material einem Endabscheider zur Abtrennung des Endprodukts mit gewünschter Zielgröße zugeführt wird.

9. Vorrichtung zur Herstellung und/oder Konditionierung von pulverförmigem Material mittels eines Strahlschichtapparats bestehend aus einer Strahlkammer, die in Strömungsrichtung der von unten zugeführten Gasströmung nach außen geneigte Seitenwände aufweist und dessen oberer Bereich als Abscheideraum ausgebildet ist, **dadurch gekennzeichnet, dass** der ersten Strahlkammer (6) mit einer integrierten Staubabscheidevorrichtung (7) eine zweite darüber liegende Strahlkammer (8) mit einer integrierten Staubabscheidevorrichtung (9) angeordnet ist und die zusammen einen Strahlschichtapparat (1) bilden.

10. Vorrichtung nach Anspruch 9, **dadurch gekennzeichnet, dass** die Strahlkammer (6) und (8) im unteren Bereich eine nahezu mittig angeordnete Öffnung (2) aufweist, die beidseitig in einen in Richtung der Seitenwände (3) weisenden Kanal (16) mündet.

11. Vorrichtung nach Anspruch 9 und 10, **dadurch gekennzeichnet, dass** die über der Strahlkammer (6) bzw. (8) angeordnete Staubabscheidevorrichtung (7) bzw. (9) beispielsweise ein Zick-Zack-Sichter ist oder durch eine Querschnittserweiterung gebildet wird.

12. Vorrichtung nach Anspruch 9 bis 11, **dadurch gekennzeichnet, dass** über der Öffnung (2) der Strahlkammern (6) und (8) ein keilförmig ausgebildetes Einbauteil (5) angeordnet ist, dessen untere Wand jeweils eine Seitenwand des Kanals (16) bildet.

13. Vorrichtung nach Anspruch 9 bis 12, **dadurch gekennzeichnet, dass** der Strahlschichtapparat (1) einen zweiseitig symmetrischen rechteckigen Querschnitt aufweist.

14. Vorrichtung nach Anspruch 9 bis 13, **dadurch gekennzeichnet, dass** in dem hohl ausgebildeten Einbauteil (5) eine regelbare Heizeinrichtung (11), beispielsweise Hochfrequenz-Heizelemente, zur thermischen Behandlung des Materials angeordnet sind.

15. Vorrichtung nach Anspruch 9 bis 14, **dadurch gekennzeichnet, dass** die Seitenwände des keilförmigen Einbauteils (5) eine gerade oder nach innen gekrümmte Kontur aufweisen, wobei der Winkel (A) zwischen den Seitenwänden und der Grundfläche des Einbauteils (5) zwischen 45° bis 60° liegt.

16. Vorrichtung nach Anspruch 9 bis 15, **dadurch gekennzeichnet, dass** in der Strahlkammer (6) und/oder der Strahlkammer (8) Eindüsungen (10) für Flüssigkeiten oder feststoffhaltige Flüssigkeiten, wie Suspensionen, Lösungen, Schmelzen oder Schlämme, angeordnet sind.

17. Vorrichtung nach Anspruch 9 bis 16, **dadurch gekennzeichnet, dass** die Staubabscheidevorrichtung (9) einen höheren Abscheidegrad aufweist als die Staubabscheidevorrichtung (7).

18. Vorrichtung nach Anspruch 9 bis 17, **dadurch gekennzeichnet, dass** dem Strahlschichtapparat (1) ein Abscheider nachgeschaltet ist.

## Claims

1. Method for the production and/or conditioning of powdered material in a jet layer with inert bed particles, wherein the particle size that is to be obtained is produced by abrasion of the particles of material and the inert bed particles moving against one another in the jet layer and the end product is deposited in a collector, **characterised in that** in a two-stage or multi-stage treatment of the material, the powdered material that is pre-treated in a first jet layer (4) and separated from the coarser particles of material in an integrated dust depositing device (7) is supplied, together with the gas flow emerging from the first jet layer (4), as a stream (15) of material and gas to a second jet layer (4) located above it, for further grinding and conditioning, and after separation in an integrated dust depositing device (9), it is expelled from the coarser particles of material with the gas flow as a powdered material with very small particle diameters from the two-layer jet layer treatment, while the coarser particles of material are fed back into the jet layer (4) of the second jet chamber (8).

2. Method according to claim 1, **characterised in that** a current (12) of gas or of material and gas is supplied to the jet chamber (6) and a current (15) of material and gas is supplied to the jet chamber (8), virtually in the centre thereof, and is deflected towards the outer side walls (3) of the jet layer apparatus (1) so as to obtain a roller-shaped flow (13) located in the axial direction of the jet chambers (6) and (8) and also directed upwards at the outer side walls (3).

3. Method according to claims 1 and 2, **characterised in that** the coarser particles of material deposited in the dust depositing device (7) are fed back into the jet layer (4) of the first jet chamber (6).

4. Method according to claims 1 to 3, **characterised in that** liquids or solid-containing liquids such as suspensions, solutions, melts or slurries, are fed into the jet chamber (6) and/or the jet chamber (8) through an inlet nozzle (10).

5. Method according to claims 1 to 4, **characterised in that** the jet layer (4) of the jet chambers (6) and (8) is heated indirectly in a controllable manner, for example using high frequency currents, for the purpose of heat-treating the material.

6. Method according to claims 1 to 5, **characterised in that** the liquids supplied to the jet chambers (6) and/or (8) contain salts dissolved in liquids.

7. Method according to claims 1 to 6, **characterised in that** the inert bed particles located in the jet layer (4) of the jet chambers (6) and (8), and/or the coating thereon, consist(s) of a material that can be heated using high frequency currents.

8. Method according to claims 1 to 7, **characterised in that** the dry powdered material discharged from the two-step jet layer treatment is fed to a final collector for separating off the end product of the desired target size.

9. Apparatus for the production and/or conditioning of powdered material by means of a jet layer apparatus consisting of a jet chamber which has side walls sloping outwards in the direction of flow of the gas current fed in from below, and the upper region of which is configured as a separating chamber, **characterised in that** the first jet chamber (6) with an integrated dust depositing device (7) has a second jet chamber located above it with an integrated dust depositing device (9) and together they form a jet layer apparatus (1).

10. Apparatus according to claim 9, **characterised in that** the jet chambers (6) and (8) comprise, in the lower region, a substantially central opening (2) which opens on both sides into a channel (16) facing towards the side walls (3).

11. Apparatus according to claims 9 and 10, **characterised in that** the dust depositing device (7) or (9) arranged above the jet chamber (6) or (8), respectively, is a zigzag sifter, for example, or is formed by a portion of wider cross-section.

12. Apparatus according to claims 9 to 11, **characterised in that** a wedge-shaped insert (5) is arranged over the opening (2) of the jet chambers (6) and (8), its lower wall forming a side wall of the channel (16).

13. Apparatus according to claims 9 to 12, **characterised in that** the jet layer apparatus (1) has a bilaterally symmetrical rectangular cross-section.

14. Apparatus according to claims 9 to 13, **characterised in that** adjustable heating means (11), for example high frequency heating elements, for heat-treating the material, are arranged in the hollow insert (5).

15. Apparatus according to claims 9 to 14, **characterised in that** the side walls of the wedge-shaped insert (5) have a straight or inwardly curved contour, the angle (A) between the side walls and the base of the insert (5) being from 45° to 60°.

16. Apparatus according to claims 9 to 15, **characterised in that** inlet nozzles (10) for liquids or solid-containing liquids such as suspensions, solutions, melts or slurries, are provided in the jet chamber (6) and/or the jet chamber (8).

17. Apparatus according to claims 9 to 16, **characterised in that** the dust depositing device (9) has a higher separation efficiency than the dust depositing device (7).

18. Apparatus according to claims 9 to 17, **characterised in that** a collector is provided downstream of the jet layer apparatus (1).

## Revendications

1. Procédé de production et/ou de conditionnement d'un matériau pulvérulent dans une couche à jet pulsé et à particules de lit inerte, dans lequel la grosseur de particules recherchée est engendrée par abrasion des particules de matériau animées d'un mouvement en contiguïté dans ladite couche à jet pulsé, et des particules du lit inerte, puis le produit définitif est séparé dans un séparateur, **caractérisé par le fait que**, lors d'un traitement dudit matériau en deux ou plusieurs étapes, le matériau pulvérulent préalablement traité dans une première couche (4) à jet pulsé, et séparé d'avec les particules de matériau plus grossières dans un dispositif intégré (7) séparateur de poussières, est dirigé vers une seconde couche sus-jacente (4) à jet pulsé, en vue du broyage ultérieur et du conditionnement, avec l'écoulement gazeux sortant de ladite première couche (4) à jet pulsé, en tant qu'écoulement (15) de matériau et de gaz ; puis déchargé à l'issue du traitement en deux étapes par des couches à jets pulsés, après séparation d'avec les particules de matériau plus grossières dans un dispositif intégré (9) séparateur de poussières, avec l'écoulement gazeux, en tant que matériau pulvérulent à très petits diamètres de particules, tandis que lesdites particules de matériau plus grossières sont à nouveau délivrées à la couche (4) à jet pulsé de la seconde chambre de projection (8).

2. Procédé selon la revendication 1, **caractérisé par le fait qu'**un écoulement de gaz ou un écoulement (12) de matériau et de gaz, et un écoulement (15) de matériau et de gaz, sont respectivement délivrés à la chambre de projection (6) et à la chambre de projection (8), approximativement au centre desdites chambres, puis sont déviés en direction des parois latérales extérieures (3) de l'appareil (1) à couches à jets pulsés, de façon telle qu'il en résulte un écoulement (13) en forme de volutes, situé dans la direction axiale desdites chambres de projection (6 et 8) et conjointement dirigé vers le haut contre lesdites parois latérales extérieures (3).

3. Procédé selon les revendications 1 et 2, **caractérisé par le fait que** les particules de matériau plus grossières, séparées dans le dispositif (7) séparateur de poussières, sont à nouveau délivrées à la couche (4) à jet pulsé de la première chambre de projection (6).

4. Procédé selon les revendications 1 à 3, **caractérisé par le fait que** des liquides ou des liquides renfermant des corps solides, tels que des suspensions, des solutions, des masses en fusion ou des boues, sont délivrés à la chambre de projection (6) et/ou à la chambre de projection (8) par l'intermédiaire d'une buse d'admission (10).

5. Procédé selon les revendications 1 à 4, **caractérisé par le fait que** la couche (4) à jet pulsé de la chambre de projection (6 ; 8) est chauffée en mode indirect et régulable, par exemple au moyen de courants à haute fréquence, en vue du traitement thermique du matériau.

6. Procédé selon les revendications 1 à 5, **caractérisé par le fait que** les liquides, délivrés aux chambres de projection (6 et/ou 8), renferment des sels dissous dans des liquides.

7. Procédé selon les revendications 1 à 6, **caractérisé par le fait que** les particules du lit inerte et/ou leur revêtement, situé(es) dans la couche (4) à jet pulsé de la chambre de projection (6 ; 8), consiste(nt) en un matériau pouvant être chauffé par des courants à haute fréquence.

8. Procédé selon les revendications 1 à 7, **caractérisé par le fait que** le matériau pulvérulent sec, déchargé à l'issue du traitement en deux étapes par des couches à jets pulsés, est délivré à un séparateur final en vue de la séparation du produit définitif présentant une taille de consigne souhaitée.

9. Dispositif de production et/ou de conditionnement d'un matériau pulvérulent, au moyen d'un appareil à couches à jets pulsés constitué d'une chambre de projection qui est munie de parois latérales inclinées vers l'extérieur dans la direction de circulation de l'écoulement gazeux délivré de bas en haut, et dont la région supérieure est réalisée sous la forme d'un compartiment de séparation, **caractérisé par le fait qu'**une seconde chambre de projection (8), à dispositif intégré (9) séparateur de poussières, est assignée à la première chambre de projection (6) à dispositif intégré (7) séparateur de poussières, au-dessus de laquelle elle se trouve, lesdites chambres formant conjointement un appareil (1) à couches à jets pulsés.

10. Dispositif selon la revendication 9, **caractérisé par le fait que** la chambre de projection (6 ; 8) présente, dans la région inférieure, un orifice (2) pratiqué approximativement au centre et débouchant, de part et d'autre, dans un canal (16) pointant en direction des parois latérales (3).

11. Dispositif selon les revendications 9 et 10, **caractérisé par le fait que** le dispositif (7, respectivement 9) séparateur de poussières, placé au-dessus de la chambre de projection (6, respectivement 8), se présente par exemple comme un crible en zigzag ou est formé par un élargissement de section transversale.

12. Dispositif selon les revendications 9 à 11, **caractérisé par le fait qu'**une pièce intégrée (5), de réalisation cunéiforme, est placée au-dessus de l'orifice (2) des chambres de projection (6 et 8), la paroi inférieure de ladite pièce formant respectivement une paroi latérale du canal (16).

13. Dispositif selon les revendications 9 à 12, **caractérisé par le fait que** l'appareil (1) à couches à jets pulsés offre une section transversale rectangulaire à symétrie bilatérale.

14. Dispositif selon les revendications 9 à 13, **caractérisé par le fait qu'**un système régulable de chauffage (11), se présentant par exemple comme des éléments chauffants à haute fréquence, est logé dans la pièce intégrée (5) de réalisation creuse, en vue du traitement thermique du matériau.

15. Dispositif selon les revendications 9 à 14, **caractérisé par le fait que** les parois latérales de la pièce intégrée cunéiforme (5) présentent un profil rectiligne ou courbé vers l'intérieur, l'angle (A), entre lesdites parois latérales et la surface de base de ladite pièce intégrée (5), étant compris entre 45° et 60°.

16. Dispositif selon les revendications 9 à 15, **caractérisé par le fait que** des buses d'admission (10), destinées à des liquides ou à des liquides renfermant des corps solides, tels que des suspensions, des solutions, des masses en fusion ou des boues, sont situées dans la chambre de projection (6) et/ou dans la chambre de projection (8).

17. Dispositif selon les revendications 9 à 16, **caractérisé par le fait que** le dispositif (9) séparateur de poussières présente un plus haut degré de séparation que le dispositif (7) séparateur de poussières.

18. Dispositif selon les revendications 9 à 17, **caractérisé par le fait qu'**un séparateur est implanté en aval de l'appareil (1) à couches à jets pulsés.
